# FASCICULE DE BREVET EUROPEEN

(11) **EP 2 512 928 B1**
(45) Date de publication et mention de la délivrance du brevet: **07.09.2016**
(21) Numéro de dépôt: 10801644.5
(22) Date de dépôt: 09.12.2010
(51) Int. Cl.: B64D 29/06, F02K 1/72

(54) **STRUCTURE SUPPORT POUR INVERSEUR DE POUSSÉE NOTAMMENT À GRILLES**
GITTERARTIGE STRUKTUR ZUR UNTERSTÜTZUNG VON SCHUBUMKEHRVORRICHTUNGEN
SUPPORT GRID STRUCTURE FOR THRUST REVERSERS

(30) Priorité: 18.12.2009 FR 0906159
(43) Date de publication de la demande: 24.10.2012
(73) Titulaire: Aircelle, 76700 Gonfreville l'Orcher (FR)
(72) Inventeur: BELLANGER, Alexandre, F-76600 Le Havre (FR); BOUILLON, Florent, F-76280 Anglesqueville l'Esneval (FR); DUBOIS, Laurent, F-76620 Le Havre (FR)
(74) Mandataire: Gaillarde, Frédéric F. Ch.
(86) Numéro de dépôt international: PCT/FR2010/052655
(87) Numéro de publication internationale: WO 2011/073551

(56) Documents cités:
- EP-A2- 0 894 715
- WO-A1-2007/147193
- FR-A1- 2 926 605

## Description

La présente invention se rapporte à une structure support pour inverseur de poussée notamment à grilles.

Classiquement, un inverseur de poussée à grilles comprend deux demi-capots montés chacun coulissant sur une demi-poutre support dite poutre 12h montée pivotante sur un mât de support de nacelle.

Il peut également exister une poutre support inférieure dite 6h comprenant deux demi-poutres généralement chacune équipée de moyens de liaison entre elles et de verrouillage des deux demi-structures. Chaque demi-poutre 6h est classiquement liée à la demi poutre 12h correspondante par l'intermédiaire d'une structure interne entourant le turboréacteur.

Les structures supports ou poutres sont également généralement équipées de rails de guidage permettant un mouvement de coulissement de chaque demi-capot sur sa demi-poutre associée entre alternativement une position de l'inverseur de poussée dite en jet direct et une position de l'inverseur de poussée dite en jet inversé.

Le mouvement de rotation de chaque demi-poutre sur le mât de support de nacelle permet de faire pivoter chaque demi-capot par rapport à ce mât pour les opérations de maintenance.

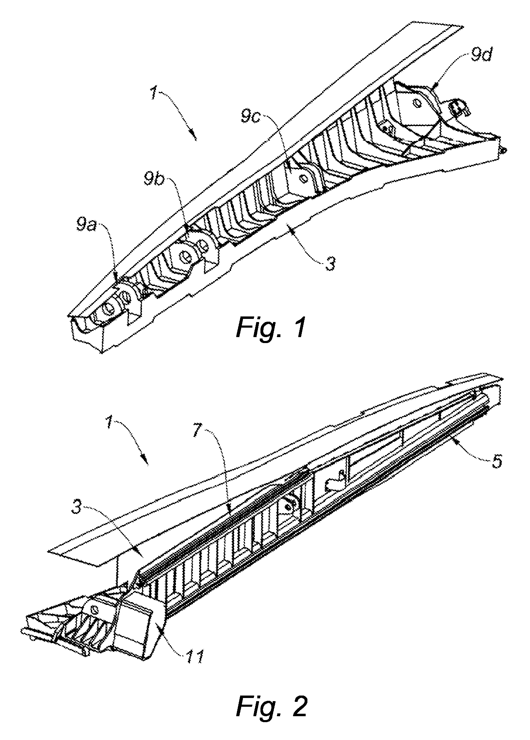

Comme cela est représenté sur les figures 1 et 2 ci-annexées, chaque demi-poutre 1 est formée dans un alliage métallique nervuré 3, et comprend typiquement, sur sa face extérieure, des rails primaire 5 et secondaire 7 aptes à permettre le mouvement du demi-capot (non représenté) associé, et une pluralité de chapes de charnières 9a, 9b, 9c, 9d aptes à permettre l'articulation de la demi-poutre 1 sur le mât de nacelle associé.

Un réceptacle 11, monté sur la partie amont (par rapport au sens de l'écoulement d'air dans la nacelle) de la demi-poutre 1, permet la fixation d'un cadre avant destiné à supporter les grilles de l'inverseur de poussée (cadre et grilles non représentés).

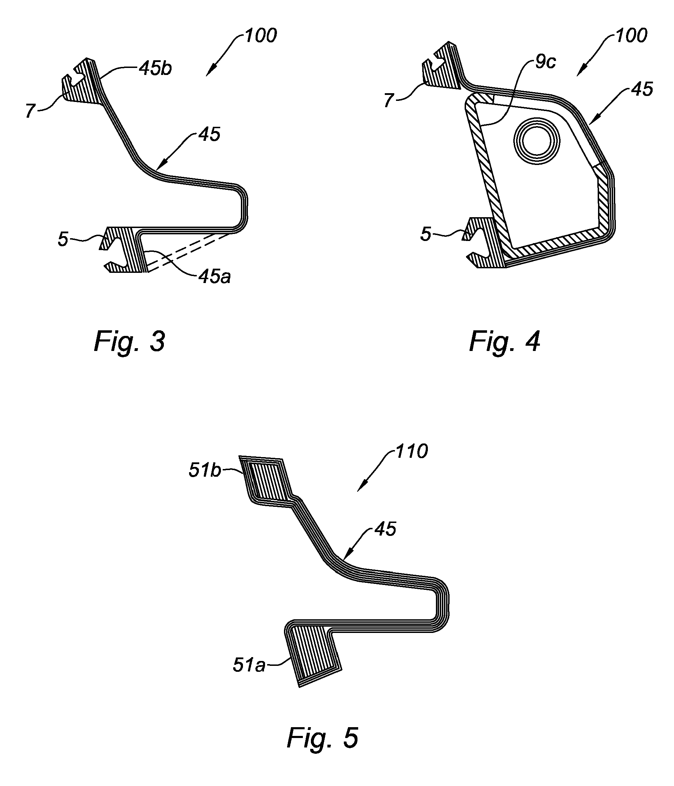

Comme cela est visible sur la figure 3, la demi-poutre 1 est rapportée par rivetage 13 sur la partie supérieure 15 d'un panneau de demi-structure interne fixe 17, formé généralement en matériau composite, et définissant, avec le capot d'inverseur de poussée associé, une veine de circulation d'un flux secondaire du turboréacteur.

L'ensemble formé par la demi-poutre 1, ses rails 5, 7 et ses chapes de charnières 9a à 9d, est souvent désigné par « structure 12 heures », étant donnée sa position en haut du cercle défini par une section de nacelle, et par analogie avec le cadran d'une horloge.

Les demi-poutres 6h possèdent sensiblement la même structure à la différence qu'elles ne comprennent pas de chapes de charnière mais des chapes de verrouillage et/ou des moyens de verrouillage correspondants.

En vue d'alléger les demi-poutres et réduire leurs coûts de production, il a été envisagé d'utiliser des matériaux composites connus pour permettre une diminution importante de la masse tout en répondant aux exigences de tenue mécaniques et structurelles.

Le document WO 2007/147193 divulgue une telle structure de support et de guidage apte à supporter un demi-capot d'inverseur de poussée, ladite poutre comprenant une structure de base constituée par un profilé creux ayant une section transversale essentiellement fermée et réalisée en matière composite.

Les document FR2926605 et EP0894715 montrent d'autres structures support pour inverseur de poussée réalisées en matériau composite.

La présence d'une structure essentiellement fermée permet d'assurer la résistance mécanique de la poutre.

Toutefois, il existe un besoin constant d'allégement des structures aéronautiques.

La présente invention a pour but de proposer une structure support encore plus allégée et consiste pour ce faire en une structure support pour nacelle de turboréacteur,
notamment équipée d'un dispositif d'inverseur de poussée, comprenant au moins un corps de base réalisé en matériau composite, où le corps de base présente une section transversale essentiellement ouverte et équipée d'au moins un moyen de renfort.

En effet, il a été constaté de manière surprenante que la rigidité nécessaire pouvait ne pas être uniquement obtenue en prévoyant une section essentiellement fermée, mais qu'une section ouverte permettait également, notamment en association avec un moyen de renfort correspondant, de répondre à cette exigence même en utilisant des matériaux composites.

La masse totale de la structure s'en trouve donc grandement diminuée.

Une telle structure de poutre permet également une réduction importante des coûts de fabrication, puisque qu'une section ouverte permet d'utiliser un moule simple ne nécessitant pas la mise en place d'un noyau interne, ni son extraction après moulage.

Par ailleurs, une structure ouverte permet une meilleure accessibilité pour l'installation de composants sur la pièce finie, et notamment les axes des charnières de pivotement, ou encore pour des contrôles qualité de la pièce produite ou de tenue en service voire des opérations de réparation.

On notera également qu'une section ouverte permet une grande liberté dans la forme de la poutre. En effet, dans le cas d'une réduction progressive de section, par exemple, une telle réduction de section permettant notamment une meilleure adaptation de la poutre aux lignes aérodynamiques internes et une meilleure intégration d'une pièce de carénage intérieur de la veine de circulation du flux secondaire, une section fermée nécessitera l'utilisation de noyaux de moulage solubles.

De manière préférentielle, le corps de base est réalisé selon un procédé de moulage par infusion de résine et plus particulièrement par moulage par transfert de résine (RTM).

Avantageusement, la structure comprend au moins un moyen de guidage, notamment du type rail, en carbone, métal ou alliage métallique notamment, pour montage à coulissement d'un capot mobile du dispositif d'inverseur de poussée. Un tel rail est adapté au cas d'un inverseur de poussée à grilles. Les rails pourront être rapportés, notamment par collage, rivetage et autres méthodes de fixation sur la structure ou intégrés dans le matériau composite utilisé pour réaliser l'ensemble d'une seule pièce.

De manière avantageuse, ladite structure support est liée à une partie d'un panneau d'une structure interne fixe de carénage d'un turboréacteur.

Selon une première variante, le panneau de la structure interne fixe est rapporté, notamment par collage, rivetage ou toute autre méthode de fixation, sur la structure support. Avantageusement, le panneau de la structure interne fixe est rapporté de manière à fermer la section ouverte du corps de base. La section fermée ainsi recrée augmente la résistance de l'ensemble.

Selon une deuxième variante, le panneau de la structure interne fixe est intégré à la structure support. La structure interne pourra notamment être intégrée dans le drapage de la structure ou par réalisation de la structure interne en matériau composite et en une seule pièce avec la structure support.

L'intégration de la structure interne fixe (généralement désignée sous le sigle IFS pour Internal Fixed Structure) permet d'éviter de riveter la structure support au panneau de structure interne, ce qui entraîne, d'une part, un gain de masse, et d'autre part, une simplification de l'assemblage.

Préférentiellement, la structure support comprend au moins une chape ou ferrure pour une fixation, de préférence démontable et/ou pivotante, à une structure portante de type pylône ou à une autre structure support selon l'invention. Les chapes et ferrures pourront être réalisées indifféremment en alliage métallique, carbone, matériau composite, etc et rapportées (notamment par collage, rivetage, boulonnage, ou toute autre méthode de fixation...) ou intégrées à la structure support (intégrées dans le drapage de la structure ou également réalisées en matériau composite avec la structure, par exemple).

Selon un premier exemple, la structure est une demi-poutre 12h.

Selon un deuxième exemple, la structure est une demi-poutre 6h.

Avantageusement, le corps de base présente au moins un renfort.

Avantageusement encore, le corps de base comprend une pluralité de renforts répartis le long de ladite structure.

De manière préférentielle, au moins une partie des renforts ont une forme d'équerre.

De manière avantageuse, les renforts sont réalisés en matériau composite. Ceci permet de les intégrer au moulage de la pièce.

Avantageusement, les renforts font partie intégrante de la structure support.

De manière avantageuse, la structure support intègre au moins une portion de liaison à un cadre avant.

Selon une première variante, la structure supporte présente au moins une portion raidie par gaufrage, notamment une paroi plancher de la structure.

De manière alternative ou complémentaire, la structure support présente au moins une portion raidie par ondulation, notamment une paroi plancher de la structure.

De manière alternative ou complémentaire encore, la structure support présente au moins une portion raidie par doublage de paroi, notamment une paroi plancher de la structure, par exemple en forme de U.

Avantageusement, la structure support intègre une paroi de carénage apte à assurer un aérodynamisme intérieur au niveau d'une veine de circulation de flux secondaire.

La présente demande se rapporte également à une nacelle d'aéronef, caractérisée en ce qu'elle comprend au moins une structure support conforme à l'invention.

La présente invention sera mieux comprise à la lumière de la description détaillée qui suit en regard du dessin annexé dans lequel :
- Les figures 1 et 2 sont des vues en perspective d'une structure 12 heures métallique de l'état de la technique ;
- Les figures 3 et 4 sont des vues d'un premier exemple d'une structure support respectivement en section courante et dans une zone de chape de charnière ;
- La figure 5 est une vue analogue à la figure 3 d'une variante de ladite structure;
- La figure 6 est une vue partielle d'un premier mode de réalisation préféré d'une structure support selon l'invention ;
- La figure 7 est une vue partielle d'un deuxième exemple d'une structure support;
- Les figures 8 et 9 sont des vues respectivement partielle et en coupe d'un troisième exemple;
- La figure 10 est une vue partielle d'un quatrième exemple.

Sur l'ensemble de ces figures, des références identiques ou analogues désignent des organes ou ensembles d'organes identiques ou analogues.

Les figures 3 à 5 montrent une demi-poutre 100 prise en coupe transversale respectivement en section courante et au niveau d'une chape 9c de charnière.

La poutre 100 possède un caisson 45 à section ouverte et réalisé à partir de matériau composite, le caisson étant en l'espèce formé par drapage de plusieurs couches de fibres composites.

Le caisson ouvert 45 possède deux extrémités libres 45a, 45b au niveau de chacune desquelles est disposé un rail de guidage 5, 7. Comme évoqué précédemment, les rails 5, 7 peuvent être réalisés en alliage métallique ou en matériau composite et être rapportés sur le caisson ou intégré à celui-ci, notamment par insertion dans le drapage comme représenté sur la figure 5.

Comme décrit pour les figures 1 et 2, la demi-poutre 100 comprend des chapes 9a, 9b, 9c, 9d de charnières disposées à intervalles définis le long d'un axe longitudinal de ladite demi-poutre 100.

La figure 4 est une vue en coupe au niveau d'une de ces chapes 9c. Comme pour les rails de guidage 5 et 7, les chapes 9a, 9b, 9c, 9d peuvent être réalisées classiquement en alliage métallique, en matériau composite ou encore en carbone forgé, par exemple, et rapportées sur la demi-poutre 100 ou intégrées à celle-ci.

La demi-poutre 100 pourra être obtenue par moulage, notamment selon un procédé d'infusion de résine ou par transfert de résine (RTM) dans un moule comprenant au moins un noyau et au moins une matrice. Ces techniques sont connues de l'homme du métier et ne font pas l'objet de la présente demande.

De manière générale, et comme visible sur la poutre 110 de la figure 5, des ébauches 51 a, 51 b définissant les rails 5 et 7 sont placées sur le noyau, et on vient draper les couches de matériau composite formant le caisson 45 sur ces ébauches 51 a, 51 b, et sur le noyau.

On vient ensuite fermer la matrice sur le noyau, et l'on injecte de la résine dans l'interface entre cette matrice et ce noyau, permettant ainsi d'assembler entre eux les différents éléments formant la demi-poutre 100 selon un procédé de transfert de résine connu sous le sigle RTM, c'est-à-dire « Resin Transfert moulding ».

En variante, le caisson 45 peut être réalisé à partir d'au moins deux sous-ensemble de drapage venant enserrer les ébauches de rails 51 a, 51 b (résultat figure 5).

Cet agencement particulier, qui peut également être obtenu par un procédé du type « RTM » permet une liaison intime des rails 5, 7 avec le caisson ouvert 45, et donc une excellente résistance de l'ensemble.

On notera également que les rails 5, 7 pourront être associés à une plaque support fixés ensuite sur la demi-poutre. Toutes les variantes d'intégration et de fixation de rails 5, 7 connues de l'homme du métier peuvent être mis en oeuvre dans le cadre de la présente invention.

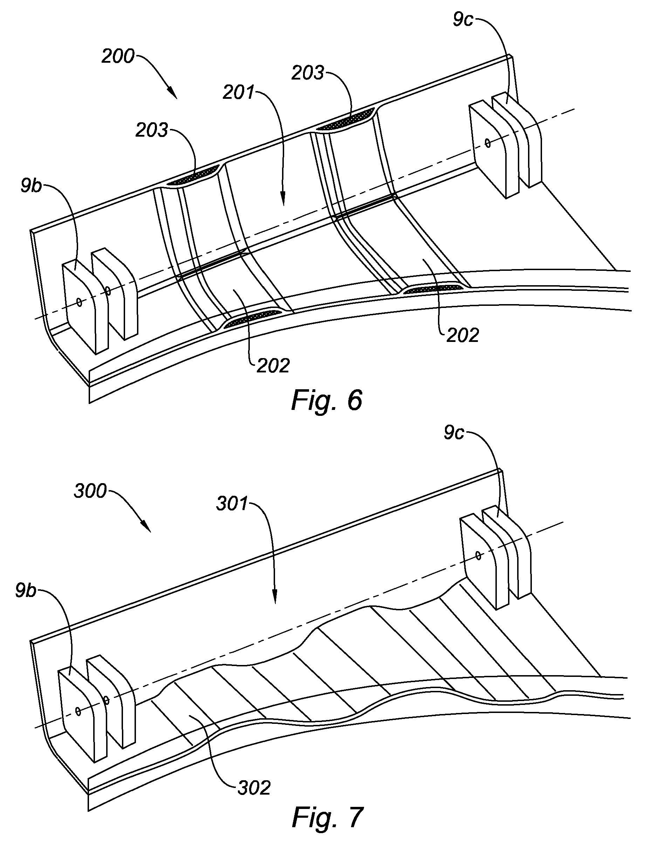

Les figures 6 à 10 présentent un mode de réalisation préféré et plusieurs exemples du corps de base d'une demi-poutre selon l'invention comprenant un corps de base équipé d'au moins un moyen de renfort et exposant notamment plusieurs solutions pour augmenter la résistance d'une poutre composite à section ouverte selon l'invention.

La figure 6 montre une poutre 200 en matériau composite possédant conformément à l'invention un corps de base 201 à section ouverte, et plus particulièrement une section en L.

La poutre 200 possède une pluralité de renforts 202 en équerre répartis discrètement le long de ladite poutre 200.

Les renforts peuvent être réalisés en alliage métallique ou en matériau composite, par exemple, et être rapportés ou intégrés dans le corps de base 201.

En l'occurrence, les renforts 202 sont réalisés par intégration dans le drapage de la poutre 200 par gaufrage de plis. Chaque renfort 202 possède une âme 203 pouvant, notamment, être réalisée en matériau composite, mousse ou autre.

La figure 7 présente une poutre 300 possédant un corps de base 301 à section ouverte formant sensiblement un L. Le corps de base possède un pied formant une paroi plancher 302 du corps de base, ladite paroi étant conformée de manière à présenter une surface ondulée conférant une rigidité accrue à l'ensemble.

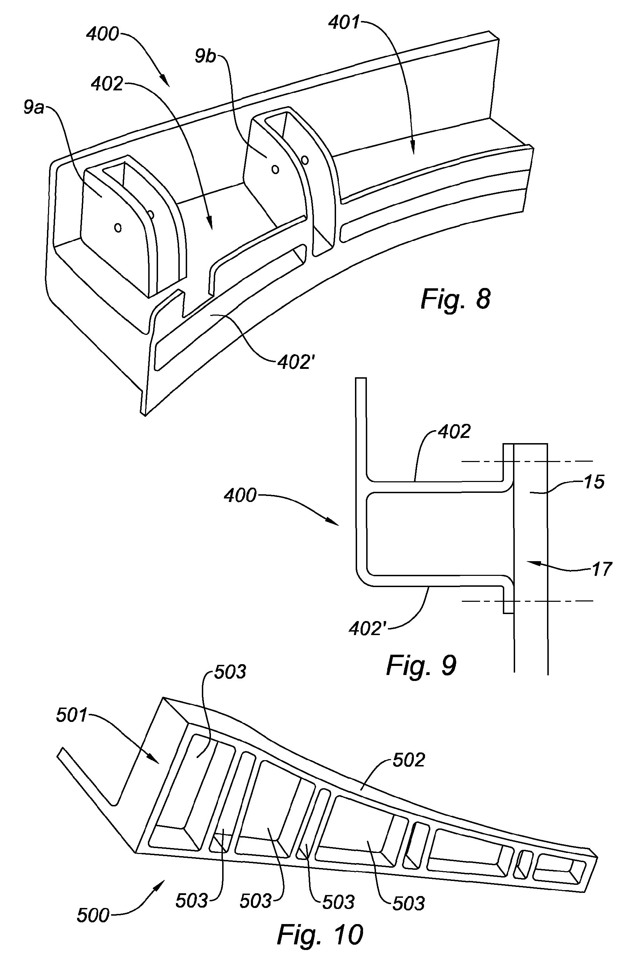

La figure 8 présente une poutre 400 possédant un corps de base 401 à section ouverte formant sensiblement un L. Le corps de base possède un pied se présentant sous la forme d'une double paroi 402, 402'. Conformément à l'invention, la double paroi plancher 402, 402' est ouverte, en l'occurrence latéralement.

Conformément à un exemple, et comme représenté sur la figure 9, une paroi d'un panneau supérieur 15 d'une structure interne fixe 17 vient fermer la double paroi 402, 402' ouverte. Comme mentionné précédemment, la paroi 15 de la structure fixe 17 pourra être rapportée selon les moyens connus de l'homme du métier, notamment par collage ou rivetage.

La figure 10 présente une poutre 500 possédant un corps de base 501 à section ouverte formant sensiblement un L. Le corps de base possède un pied 502 dans l'épaisseur duquel sont réalisées des alvéoles 503, réalisant de ce fait une section ouverte. Les alvéoles 503 pourront être recouvertes par un carénage rapporté sur la poutre, notamment, comme dans le cas représenté où les alvéoles s'ouvrent dans une surface inférieure, par un carénage visant à assurer l'aérodynamisme d'une veine de circulation d'air.

Comme évoqué précédemment, les demi-poutres sont liées à un panneau 15 d'une structure fixe 17. Dans les cas où ce panneau ne ferme pas la section du corps de base, il pourra être intégré à la demi-poutre, et éventuellement réalisé lui-même en matériau composite.

L'intégration pourra s'effectuer notamment par enveloppement des plis composites de la demi-poutre de part et d'autre du panneau 15 et de sa structure interne notamment.

Bien que l'invention ait été décrite avec un exemple particulier de réalisation, il est bien évident qu'elle n'y est nullement limitée et qu'elle comprend tous les équivalents techniques des moyens décrits ainsi que leurs combinaisons si celles-ci entrent dans le cadre de l'invention sans sortir du cadre des revendications annexées.

## Revendications

1. Structure support sous forme d'une poutre pour nacelle de turboréacteur notamment équipé d'un dispositif d'inverseur de poussée, comprenant au moins un corps de base (201) réalisé en matériau composite, le corps de base présentant une section transversale essentiellement ouverte, **caractérisé en ce que** le corps de base (201) comprend une pluralité de renforts (202) répartis le long de ladite structure, les renforts (202) étant réalisés par intégration dans le drapage de la poutre (200) par gaufrage de plis, chaque renfort (202) possédant une âme (203).

2. Structure support (200) selon la revendication 1, **caractérisée en ce que** l'âme (203) des renforts (202) est réalisée en matériau composite ou en mousse.

3. Structure support (200) selon l'une quelconque des revendications 1 et 2, **caractérisée en ce qu'**elle comprend au moins un moyen de guidage (5, 7), notamment du type rail, pour montage à coulissement d'un capot mobile du dispositif d'inverseur de poussée.

4. Structure support (200) selon l'une quelconque des revendications 1 à 3, **caractérisée en ce qu'**elle comprend au moins une chape (9a, 9b, 9c, 9d) ou ferrure pour une fixation, de préférence démontable et/ou pivotante, à une structure portante de type pylône ou à une autre structure support selon l'invention.

5. Structure support (200) selon l'une quelconque des revendications 1 à 4, **caractérisé en ce qu'**au moins une partie des renforts (202) ont une forme d'équerre.

6. Structure support (200) selon l'une quelconque des revendications 1 à 5, **caractérisée en ce que** les renforts sont réalisés en matériau composite.

7. Structure support (200) selon l'une quelconque des revendications 1 à 6, **caractérisée en ce qu'**elle intègre au moins une portion de liaison (11) à un cadre avant.

8. Structure support (200) selon l'une quelconque des revendications 1 à 7, **caractérisée en ce qu'**elle intègre une paroi de carénage apte à assurer un aérodynamisme intérieur au niveau d'une veine de circulation de flux secondaire.

9. Nacelle d'aéronef, **caractérisée en ce qu'**elle comprend au moins une structure support (200) conforme à l'une des revendications précédentes.

## Patentansprüche

1. Tragestruktur in Form eines Balkens für eine Turbinengondel, die namentlich mit einer Vorrichtung zur Schubumkehr versehen ist, umfassend mindestens einen Grundkörper (201), das aus Verbundwerkstoff hergestellt ist, wobei der Grundkörper einen im Wesentlichen offenen Querschnitt aufweist, **dadurch gekennzeichnet, dass** der Grundkörper (201) eine Mehrzahl von Verstärkungen (202) umfasst, die über die Länge dieser Struktur verteilt sind, wobei die Verstärkungen (202) durch Integration per Gaufrieren in die Hülle des Balkens (200) ausgebildet sind, wobei jede Verstärkung (202) über eine Seele (203) verfügt.

2. Tragestruktur (200) nach Anspruch 1, **dadurch gekennzeichnet, dass** die Seele (203) der Verstärkungen (202) aus Verbundwerkstoff oder Schaum hergestellt ist.

3. Tragestruktur (200) nach einem der Ansprüche 1 und 2, **dadurch gekennzeichnet, dass** sie zumindest ein Führungsmittel (5, 7) umfasst, namentlich in Form einer Schiene, für den Einschub einer beweglichen Haube der Schubumkehrvorrichtung.

4. Tragestruktur (200) nach einem der Ansprüche 1 bis 3, **dadurch gekennzeichnet, dass** sie mindestens einen Gabelkopf (9a, 9b, 9c, 9d) oder Beschlag zur Befestigung, die vorzugweise demontierbar und/oder schwenkbar ist, an eine Mastartige Tragestruktur oder an eine andere erfindungsgemäße Tragestruktur umfasst.

5. Tragestruktur (200) nach einem der Ansprüche 1 bis 4, **dadurch gekennzeichnet, dass** mindestens ein Teil der Verstärkungen (202) winkelförmig ist.

6. Tragestruktur (200) nach einem der Ansprüche 1 bis 5, **dadurch gekennzeichnet, dass** die Verstärkungen aus Verbundwerkstoff hergestellt sind.

7. Tragestruktur (200) nach einem der Ansprüche 1 bis 6, **dadurch gekennzeichnet, dass** sie mindestens einen Verbindungabschnitt (11) zu einem vorderen Rahmen aufweist.

8. Tragestruktur (200) nach einem der Ansprüche 1 bis 7, **dadurch gekennzeichnet, dass** sie eine Gehäusewand aufweist, die fähig ist, eine innere Aerodynamik auf der Ebene einer Zirkulationsleitung für einen Sekundärstrom zu gewährleisten.

9. Flugzeuggondel, **dadurch gekennzeichnet, dass** sie mindestens eine Tragestruktur (200) umfasst, die einem der vorgenannten Ansprüche entspricht.

## Claims

1. A support structure in the form of a beam for turbojet engine nacelle in particular equipped with a thrust reverser device, comprising at least one base body (201) made of composite material, the base body having a substantially open cross-section, **characterized in that** the base body (201) comprises a plurality of reinforcements (202) distributed along said structure, the reinforcements (202) being made by integration in the draping of the beam (200) by embossing of plies, each reinforcement (202) having a core (203).

2. The support structure (200) according to claim 1, **characterized in that** the core (203) of the reinforcements (202) is made of composite material or foam.

3. The support structure (200) according to any one of claims 1 and 2, **characterized in that** it comprises at least one guiding means (5, 7), in particular of the rail type, for slidingly mounting a movable cowl of the thrust reverser device.

4. The support structure (200) according to any one of claims 1 to 3, **characterized in that** it comprises at least one clevis (9a, 9b, 9c, 9d) or fitting for a fastening, preferably removable and/or pivoting, to a pylon-type bearing structure or to another support structure according to the invention.

5. The support structure (200) according to any one of claims 1 to 4, **characterized in that** at least one part of the reinforcements (202) is square-shaped.

6. The support structure (200) according to any one of claims 1 to 5, **characterized in that** the reinforcements are made of composite material.

7. The support structure (200) according to any one of claims 1 to 6, **characterized in that** it integrates at least one connecting portion (11) to a front frame.

8. The support structure (200) according to any one of claims 1 to 7 **characterized in that** it integrates a fairing wall able to ensure an inner aerodynamic at a secondary flow path.

9. An aircraft nacelle, **characterized in that** it comprises at least one support structure (200) in accordance with any of the preceding claims.
